# EUROPÄISCHE PATENTSCHRIFT

(11) **EP 3 936 752 B1**
(45) Veröffentlichungstag und Bekanntmachung des Hinweises auf die Patenterteilung: **26.10.2022**
(21) Anmeldenummer: 21183376.9
(22) Anmeldetag: 02.07.2021
(51) Int. Cl.: F16L 37/088

(54) **VERBINDER ZUM VERBINDEN ZWEIER FLUIDFÜHRENDER ELEMENTE**
CONNECTOR FOR CONNECTION BETWEEN TWO FLUID-CONVEYING ELEMENTS
DISPOSITIF DE RACCORDEMENT PERMETTANT DE RACCORDER DEUX ÉLÉMENTS FLUIDES

(30) Priorität: 06.07.2020 DE 202020103903 U
(43) Veröffentlichungstag der Anmeldung: 12.01.2022
(73) Patentinhaber: TI Automotive (Fuldabrück) GmbH, 34277 Fuldabrück (DE)
(72) Erfinder: Barthel, Iris, 34270 Schauenburg (DE); Bube, Kay, 36277 Schenklengsfeld (DE); Rohde, Reiner, 34323 Malsfeld (DE)
(74) Vertreter: Andrejewski - Honke Patent- und Rechtsanwälte Partnerschaft mbB

(56) Entgegenhaltungen:
- DE-A1-102018 219 440
- US-A1- 2018 266 602

## Beschreibung

Die Erfindung betrifft einen Verbinder zum Verbinden zweier fluidführender Elemente, insbesondere zum Verbinden von zwei Kraftfahrzeugrohrleitungen, mit einem weiblichen Steckteil und einem in das weibliche Steckteil einsteckbaren männlichen Steckteil, wobei an dem weiblichen Steckteil ein Rückhalter angeschlossen ist, mit dem das männliche Steckteil an dem weiblichen Steckteil fixierbar ist. Es liegt im Rahmen der Erfindung, dass der erfindungsgemäße Verbinder ein Schnellverbinder bzw. Quick-Connector ist. Zweckmäßigerweise handelt es sich bei dem erfindungsgemäßen Verbinder um einen VDA-Verbinder nach dem VDA-Standard oder um einen SAE-Verbinder nach dem SAE-Standard. Eine bevorzugte Ausführungsform der Erfindung ist dadurch gekennzeichnet, dass der Verbinder zum Verbinden zweier Rohrleitungen, insbesondere zweier Kraftfahrzeugrohrleitungen, eingesetzt wird.

Verbinder der vorstehend genannten Art sind aus der Praxis in unterschiedlichen Ausführungsformen grundsätzlich bekannt. Es hat sich aber gezeigt, dass die Verbindung von zwei fluidführenden Elementen, beispielsweise von zwei Kraftfahrzeugrohrleitungen mit den bekannten Verbindern teilweise fehleranfällig ist, so dass unerwünschte Leckagen auftreten. Dies ist insbesondere darauf zurückzuführen, dass die Montage der Verbinderteile auf engem Raum bzw. Bauraum durchgeführt wird. In der Folge sind in der Praxis Verbindungsfehler beobachtet worden, die insbesondere auftreten, wenn das männliche Steckteil durch unvollständige Montage nicht ordnungsgemäß und korrekt an dem weiblichen Steckteil fixiert ist. Die resultierende Verbindung ist dann nicht funktionssicher und insbesondere nicht dicht, so dass Fluide wie etwa Kraftstoff, Kühlmittel und dergleichen austreten können und die Verbindung sich im Extremfall sogar vollständig löst. Die im Zuge der Montage der bekannten Verbinder beobachteten Probleme treten insbesondere dadurch auf, dass nicht zuverlässig und eindeutig festgestellt werden kann, ob die Verbindung korrekt hergestellt wurde. Um dem Auftreten von Verbindungsfehlern entgegenzuwirken, sind Verbinder mit Einrichtungen zur Anzeige der korrekten Verbindung zwischen männlichem und weiblichem Steckteil aus der Praxis grundsätzlich bekannt. Allerdings geht die Anzeige einer ordnungsgemäßen Verbindung bei diesen Verbindern in der Regel mit einem sehr komplexen Aufbau und einem hohen Fertigungsaufwand bzw. hohen Fertigungskosten einher. Hinzu kommt, dass zumindest bei einigen der aus der Praxis bekannten Verbindern, die Einrichtungen zur Anzeige der korrekten Verbindung aufweisen, weiterhin Verbindungsfehler auftreten, weil die korrekte Montage bzw. die Verbindung zwischen dem männlichen und dem weiblichen Steckteil nicht mit ausreichender Zuverlässigkeit und insbesondere nicht eindeutig angezeigt wird. - Insoweit besteht Verbesserungsbedarf. Aus der DE 10 2018 219 440 A1 ist eine Verbindungseinheit zur Verbindung von Fluidleitungen, wobei die Verbindungseinheit einen ersten Verbindungskörper, welcher dazu eingerichtet ist, mit einer ersten, nicht zu der Verbindungseinheit gehörenden, Fluidleitung verbunden zu werden, und einen zweiten Verbindungskörper umfasst, welcher dazu eingerichtet ist, mit einer zweiten, nicht zu der Verbindungseinheit gehörenden, Fluidleitung verbunden zu werden, wobei der erste Verbindungskörper und der zweite Verbindungskörper dazu eingerichtet sind, miteinander derart verbunden zu werden, dass eine Fluidverbindung zwischen den beiden Fluidleitungen hergestellt ist, und wobei die Verbindungseinheit ferner einen maschinenlesbaren Code umfasst, welcher in einem unverbundenen Zustand des ersten Verbindungskörpers mit dem zweiten Verbindungskörper nicht erfassbar ist, und welcher in einem verbundenen Zustand des ersten Verbindungskörpers mit dem zweiten Verbindungskörper erfassbar ist, insbesondere von einer Außenseite der Verbindungseinheit her erfassbar ist, bekannt.

Demgegenüber liegt der Erfindung das technische Problem zugrunde, einen Verbinder der eingangs genannten Art anzugeben, bei dem die ordnungsgemäße Verbindung zwischen dem männlichen und dem weiblichen Steckteil funktionssicher und eindeutig angezeigt wird und der sich trotzdem durch einen einfachen und wenig komplexen Aufbau auszeichnet, so dass Verbindungsfehler vermieden werden können.

Zur Lösung dieses technischen Problems lehrt die Erfindung einen Verbinder zum Verbinden zweier fluidführender Elemente, insbesondere zum Verbinden von zwei Kraftfahrzeugrohrleitungen, mit einem weiblichen Steckteil und einem in das weibliche Steckteil einsteckbaren männlichen Steckteil, wobei an dem weiblichen Steckteil ein Rückhalter angeschlossen ist, mit dem das männliche Steckteil an dem weiblichen Steckteil fixierbar ist. Der erfindungsgemäße Verbinder ist dadurch gekennzeichnet, dass
das weibliche Steckteil zumindest ein Verifikationselement, insbesondere in Form eines Codes, aufweist das im unfixierten Zustand des männlichen Steckteils zumindest bereichsweise von zumindest einer an dem weiblichen Steckteil angeordneten Blende verdeckt und nicht auslesbar ist
und/oder das weibliche Steckteil zumindest einen Teil eines Verifikationselementes, insbesondere in Form eines Teils eines Codes, aufweist wobei das Verifikationselement bzw. der Code im unfixierten Zustand des männlichen Steckteils unvollständig und nicht auslesbar ist und wobei an zumindest einer an dem weiblichen Steckteil angeordneten Blende zumindest ein weiterer bzw. der fehlende Teil des Verifikationselementes bzw. des Codes angeordnet ist,
wobei die zumindest eine Blende beim Einstecken des männlichen Steckteils in das weibliche Steckteil derart verschoben wird, dass das Verifikationselement bzw. der Code im fixierten bzw. vollständig eingesteckten Zustand des männlichen Steckteils vollständig ist und/oder auslesbar ist.

Erfindungsgemäß weist das weibliche Steckteil zumindest ein Verifikationselement und/oder zumindest einen Teil eines Verifikationselementes auf. Verifikationselement meint im Rahmen der Erfindung insbesondere ein Element, mit dem die ordnungsgemäße Verbindung, also der Zustand, in dem das männliche Steckteil vollständig in das weibliche Steckteil eingesteckt und durch den Rückhalter an dem weiblichen Steckteil fixiert ist, eindeutig angezeigt bzw. verifiziert werden kann. Bei dem Verifikationselement kann es sich insbesondere um einen Code handeln. Im unfixierten Zustand des männlichen Steckteils ist der Code erfindungsgemäß nicht auslesbar, weil er verdeckt und/oder unvollständig ist. Auslesbar meint im Rahmen der Erfindung insbesondere, dass das Verifikationselement bzw. der Code vollständig und korrekt ausgelesen werden kann. Die Auslesbarkeit kann sich insbesondere auf eine vollständige und korrekte visuelle Auslesbarkeit und/oder auf eine vollständige und korrekte Auslesbarkeit durch einen Computer beziehen. Es ist grundsätzlich auch möglich, dass der unverdeckte Teil des Codes und/oder der unvollständige Code prinzipiell ausgelesen werden kann. Erfindungsgemäß kann der die ordnungsgemäße Verbindung verifizierende, vollständige Code aber nur dann korrekt ausgelesen werden, wenn das männliche Steckteil ordnungsgemäß an dem weiblichen Steckteil fixiert ist.

Mit dem Begriff Blende ist im Rahmen der Erfindung insbesondere ein Element gemeint, dass das Verifikationselement bzw. den Code zumindest bereichsweise verdeckt und/oder einen Teil bzw. den fehlenden Teil eines Verifikationselementes aufweist bzw. trägt. Die erfindungsgemäße Blende muss also nicht zwangsläufig einen Teil des Verifikationselementes verdecken, sondern die Verschiebung der erfindungsgemäßen Blende beim Einstecken des männlichen Steckteils führt erfindungsgemäß vielmehr dazu, dass das zumindest eine Verifikationselement bzw. der zumindest eine Code im fixierten bzw. vollständig eingesteckten Zustand des männlichen Steckteils vollständig ist und/oder auslesbar ist. Fixierter Zustand des männlichen Steckteils meint im Übrigen im Rahmen der Erfindung den Zustand, in dem das männliche Steckteil vollständig in das weibliche Steckteil eingesteckt und durch den Rückhalter an dem weiblichen Steckteil fixiert ist. Demgegenüber meint im Rahmen der Erfindung der Ausdruck unfixierter Zustand insbesondere den Zustand, in dem das männliche Steckteil noch nicht in das weibliche Steckteil eingesteckt ist bzw. noch nicht vollständig in das weibliche Steckteil eingesteckt ist.

Erfindungsgemäß verdeckt die Blende zumindest bereichsweise das Verifikationselement bzw. den Code und/oder die Blende weist einen Teil bzw. den fehlenden Teil des Verifikationselementes bzw. des Codes auf. Die Verschiebung der Blende führt dazu, dass der zuvor verdeckte Teil des Verifikationselementes bzw. des Codes freigegeben wird bzw. nicht mehr verdeckt ist, so dass er auslesbar ist und/oder dazu, dass die unterschiedlichen Teile des Verifikationselementes bzw. des Codes zusammengeführt werden, so dass der Code vervollständigt wird und auslesbar ist. Der Erfindung liegt die Erkenntnis zugrunde, dass der ordnungsgemäß fixierte Zustand des männlichen Steckteils an dem weiblichen Steckteil dadurch funktionssicher und ordnungsgemäß angezeigt wird, dass das Verifikationselement bzw. der Code vollständig und korrekt auslesbar ist. Auf diese Weise kann eindeutig festgestellt werden, ob die Verbindung korrekt hergestellt wurde, denn nur im ordnungsgemäß fixierten Zustand des männlichen Steckteils an dem weiblichen Steckteil ist der Code auslesbar bzw. korrekt auslesbar.

Wenn erfindungsgemäß an einer an dem weiblichen Steckteil angeordneten Blende ein Teil bzw. der fehlende Teil des Verifikationselementes bzw. des Codes angeordnet ist, liegt es im Rahmen der Erfindung, dass der weitere bzw. fehlende Codeteil auf zumindest einer transparenten Folie vorgesehen ist, die an der Blende angeordnet ist. Dann wird zweckmäßigerweise beim Einstecken des männlichen Steckteils in das weibliche Steckteil die Blende zusammen mit der transparenten Folie verschoben, so dass im fixierten bzw. vollständig eingesteckten Zustand des männlichen Steckteils der Codeteil auf der transparenten Folie zusammen mit dem Codeteil des weiblichen Steckteils einen vollständigen und auslesbaren Code bildet. Es ist grundsätzlich auch möglich, dass ein Teil eines Codes bzw. der fehlende Teil des Codes direkt auf der Blende angeordnet ist und dann zweckmäßigerweise nach der Verschiebung der Blende im Zuge des Einsteckens des männlichen Steckteils zusammen mit dem Teil des Codes des weiblichen Steckteils den vollständigen und auslesbaren Code bildet.

Wenn erfindungsgemäß das zumindest eine Verifikationselement bzw. der zumindest eine Code im unfixierten Zustand des männlichen Steckteils zumindest bereichsweise von einer an dem weiblichen Steckteil angeordneten Blende verdeckt ist und nicht auslesbar ist, liegt es im Rahmen der Erfindung, dass das Verifikationselement bzw. der Code vollständig bzw. im Wesentlichen vollständig von der Blende verdeckt ist. Es ist auch möglich, dass das Verifikationselement bzw. der Code nur bereichsweise bzw. abschnittsweise von der Blende verdeckt ist, wobei der Code dann dennoch im unfixierten Zustand des männlichen Steckteils nicht auslesbar bzw. nicht vollständig und korrekt auslesbar ist.

Gemäß einer sehr bevorzugten Ausführungsform der Erfindung ist das Verifikationselement in Form eines Codes ausgebildet. Besonders bevorzugt handelt es sich bei dem Code um einen lesbaren Code und ganz besonders bevorzugt um einen maschinenlesbaren Code. Dieser Ausführungsform liegt die Erkenntnis zugrunde, dass der lesbare, insbesondere maschinenlesbare Code nur dann korrekt auslesbar ist, wenn eine ordnungsgemäße Verbindung des männlichen Steckteils mit dem weiblichen Steckteil hergestellt wurde. Dann kann der lesbare Code bzw. maschinenlesbare Code insbesondere durch ein Auslesegerät ausgelesen werden, so dass die ordnungsgemäße Verbindung verifiziert wird. Gemäß einer sehr bevorzugten Ausführungsvariante der Erfindung ist das Verifikationselement bzw. der Code ein QR-Code und/oder ein Barcode und/oder ein DataMatrix-Code. Es ist auch möglich, dass der Code ein einfarbiger oder mehrfarbiger Farbcode ist. Es ist weiterhin möglich, dass das Verifikationselement bzw. der Code Teil eines RFID-Schaltkreises bzw. RFID-Systems ist.

Es empfiehlt sich, dass das Verifikationselement bzw. der Code auf bzw. an der Außenoberfläche des weiblichen Steckteils angeordnet ist. Auf diese Weise ist es möglich, dass der Code im fixierten Zustand des männlichen Steckteils von der Außenseite des Verbinders zugänglich ist und ausgelesen werden kann, beispielsweise durch ein Auslesegerät ausgelesen werden kann. Bei dem Auslesegerät zur Auslesung des Verifikationselementes bzw. des Codes kann es sich zweckmäßigerweise um einen Scanner, ein Mobiltelefon, ein RFID-Lesegerät oder dergleichen handeln. Wenn das weibliche Steckteil erfindungsgemäß nur einen Teil eines Verifikationselementes bzw. ein Teil eines Codes aufweist, dann ist empfohlenermaßen dieser Teil des Codes auf der Außenoberfläche des weiblichen Steckteils angeordnet.

Gemäß einer sehr bevorzugten Ausführungsform der Erfindung ist das Verifikationselement bzw. der Code unbeweglich bzw. im Wesentlichen unbeweglich auf dem weiblichen Steckteil, insbesondere auf bzw. an der Außenfläche des weiblichen Steckteils angeordnet. Im Rahmen dieser Ausführungsform ist das Verifikationselement bzw. der Code, der auf dem weiblichen Steckteil, insbesondere auf bzw. an dessen Außenfläche, angeordnet ist nicht relativ zu dem weiblichen Steckteil beweglich. Wenn erfindungsgemäß lediglich ein Teil eines Verifikationselementes bzw. ein Teil eines Codes auf dem weiblichen Steckteil, insbesondere auf bzw. an der Außenoberfläche des weiblichen Steckteils, angeordnet ist, dann ist vorzugsweise dieser Teil des Verifikationselementes bzw. dieser Teil des Codes unbeweglich bzw. im Wesentlichen unbeweglich auf dem weiblichen Steckteil angeordnet und der weitere Teil bzw. fehlende Teil des Verifikationselementes bzw. des Codes, der an der Blende angeordnet ist, ist relativ zu dem weiblichen Steckteil beweglich, so dass der Code beim Einstecken des männlichen Steckteils in das weibliche Steckteil vervollständigt wird und dann auslesbar bzw. korrekt auslesbar ist.

Gemäß einer besonders empfohlenen Ausführungsform der Erfindung wird die Blende beim Einstecken des männlichen Steckteils in das weibliche Steckteil axial in Einsteckrichtung verschoben. Vorzugsweise wird die Blende beim Einstecken des männlichen Steckteils in das weibliche Steckteil entlang der Außenoberfläche des weiblichen Steckteils axial in Einsteckrichtung geführt. Es empfiehlt sich, dass der Code bzw. der Teil eines Codes auf bzw. an der Außenoberfläche des weiblichen Steckteils angeordnet ist und dass auch die Blende an der Außenoberfläche des weiblichen Steckteils angeordnet ist und zweckmäßigerweise beim Einstecken des männlichen Steckteils in das weibliche Steckteil axial in Einsteckrichtung verschoben wird, insbesondere entlang der Außenoberfläche des weiblichen Steckteils axial in Einsteckrichtung verschoben wird bzw. geführt wird.

Es liegt im Rahmen der Erfindung, dass die Blende als Lochblende ausgebildet ist. Vorzugsweise ist im fixierten bzw. vollständig eingesteckten Zustand des männlichen Steckteils das Verifikationselement bzw. der Code durch zumindest eine Ausnehmung der Lochblende auslesbar. Es ist bevorzugt, dass die Blende als plattenartiges Element ausgeführt ist. Wenn die Blende gemäß bevorzugter Ausführungsform als Lochblende ausgebildet ist, liegt es im Rahmen der Erfindung, dass die Blende ein plattenartiges Element mit zumindest einer Ausnehmung bzw. zumindest einem Loch ist, durch dass das Verifikationselement bzw. der Code im fixierten Zustand des männlichen Steckteils auslesbar ist. Zweckmäßigerweise ist das Verifikationselement bzw. der Code im unfixierten Zustand des männlichen Steckteils zumindest bereichsweise von einem die zumindest eine Ausnehmung der Lochblende umgebenden Randbereich verdeckt, insbesondere von einem in Einsteckrichtung des männlichen Steckteils hinter der Ausnehmung angeordneten Randbereich der Lochblende zumindest bereichsweise verdeckt.

Gemäß einer empfohlenen Ausführungsform des erfindungsgemäßen Verbinders ist das männliche Steckteil und/oder das weibliche Steckteil auf Basis zumindest eines Kunststoffes ausgebildet. Bevorzugt besteht das männliche Steckteil und/oder das weibliche Steckteil aus zumindest einem Kunststoff bzw. im Wesentlichen aus zumindest einem Kunststoff. Besonders bevorzugt besteht das männliche Steckteil und/oder das weibliche Steckteil aus zumindest einem Kunststoff bzw. im Wesentlichen aus zumindest einem Kunststoff ausgewählt aus der Gruppe "aliphatisches Polyamid, aromatisches Polyamid, Polyphenylensulfid (PPS)". Grundsätzlich liegen auch andere Kunststoffe als Material für das männliche Steckteil und/oder das weibliche Steckteil im Rahmen der Erfindung, wie beispielsweise Polyurethane und/oder Polyolefine, insbesondere Polypropylen. Gemäß einer Ausführungsform sind das männliche Steckteil und das weibliche Steckteil aus unterschiedlichen Kunststoffen hergestellt. Es ist möglich, dass das männliche Steckteil und das weibliche Steckteil auf Basis des gleichen Kunststoffes ausgebildet sind und insbesondere aus dem gleichen Kunststoff bestehen bzw. im Wesentlichen bestehen. Es ist weiterhin möglich, dass das männliche Steckteil auf Basis zumindest eines Metalls ausgebildet ist und insbesondere aus Metall besteht bzw. im Wesentlichen besteht.

Der erfindungsgemäße Rückhalter besteht gemäß einer bevorzugten Ausführungsform der Erfindung aus zumindest einem Metall bzw. im Wesentlichen aus zumindest einem Metall. Zweckmäßigerweise besteht der Rückhalter aus Stahl bzw. im Wesentlichen aus Stahl. Es ist im Rahmen einer alternativen Ausführungsform der Erfindung möglich, dass der Rückhalter aus zumindest einem Kunststoff bzw. im Wesentlichen aus zumindest einem Kunststoff, beispielsweise aus einem Polyamid und/oder aus Polyphenylensulfid besteht bzw. im Wesentlichen besteht.

Es ist bevorzugt, dass die Blende aus zumindest einem Metall besteht bzw. im Wesentlichen aus zumindest einem Metall besteht. Besonders bevorzugt ist die Blende als plattenartiges Element ausgebildet, das aus zumindest einem Metall besteht bzw. im Wesentlichen besteht. Ganz besonders bevorzugt ist die Blende ein Metallblech, beispielsweise ein Metalllochblech. Gemäß einer alternativen Ausführungsform ist die Blende auf Basis zumindest eines Kunststoffes ausgebildet und besteht zweckmäßigerweise aus zumindest einem Kunststoff.

Es liegt im Rahmen der Erfindung, dass das weibliche Steckteil zumindest eine Rückhalterausnehmung aufweist, wobei der Rückhalter im fixierten Zustand des männlichen Steckteils die zumindest eine Rückhalterausnehmung durchgreift bzw. vollständig durchgreift. Zweckmäßigerweise weist das weibliche Steckteil zwei gegenüberliegende Rückhalterausnehmungen auf, die vorzugsweise als Rückhalterschlitze ausgebildet sind. Es empfiehlt sich, dass der Rückhalter im vollständig eingesteckten bzw. fixierten Zustand des männlichen Steckteils einen Anschlagflansch des männlichen Steckteils hintergreift. Besonders bevorzugt greift der Rückhalter im vollständig eingesteckten bzw. fixierten Zustand des männlichen Steckteils in eine Fixierungsnut des männlichen Steckteils ein. Die Fixierungsnut umläuft den Umfang des männlichen Steckteils bevorzugt um zumindest 90 %, besonders bevorzugt um zumindest 95 %. Gemäß einer besonders bevorzugten Ausführungsform umläuft die Fixierungsnut den Umfang des männlichen Steckteils vollständig bzw. im Wesentlichen vollständig.

Zweckmäßigerweise ist der Rückhalter U-förmig mit einem U-Bügel und zwei an dem U-Bügel angeschlossenen U-Schenkeln ausgeführt. Im vollständig eingesteckten bzw. fixierten Zustand des männlichen Steckteils durchgreifen die U-Schenkel vorzugsweise jeweils eine Rückhalterausnehmung des weiblichen Steckteils bzw. durchgreifen diese vollständig. Sehr bevorzugt hintergreifen die U-Schenkel dabei den Anschlagflansch des männlichen Steckteils und ganz besonders bevorzugt greifen die U-Schenkel in die Fixierungsnut des männlichen Steckteils ein. Es empfiehlt sich, dass die beiden U-Schenkel federelastisch an dem U-Bügel angeschlossen sind.

Eine bevorzugte Ausführungsvariante der Erfindung ist dadurch gekennzeichnet, dass die Blende durch direkte und/oder indirekte Wechselwirkung mit dem männlichen Steckteil verschiebbar ist. Direkte Wechselwirkung meint in diesem Zusammenhang insbesondere, dass das männliche Steckteil beim Einstecken in das weibliche Steckteil direkt mit der Blende wechselwirkt bzw. an dieser Blende angreift, so dass die Blende verschoben wird. Indirekte Wechselwirkung meint in diesem Zusammenhang insbesondere, dass das männliche Steckteil beim Einstecken in das weibliche Steckteil nicht direkt mit der Blende wechselwirkt bzw. an dieser angreift, sondern mittels eines weiteren Elementes des Verbinders mit der Blende wechselwirkt, so dass diese verschoben wird.

Nach einer besonders bevorzugten Ausführungsform der Erfindung weist die Blende zumindest einen Kontaktfortsatz für die Wechselwirkung mit dem männlichen Steckteil auf. Der Kontaktfortsatz durchgreift vorzugsweise eine Kontaktausnehmung des weiblichen Steckteils und ragt bevorzugt in den Innenraum des weiblichen Steckteils hinein. Zweckmäßigerweise weist das weibliche Steckteil eine Steckausnehmung auf, in die das männliche Steckteil beim Einsteckvorgang einsteckbar ist. Der Kontaktfortsatz der Blende durchgreift zweckmäßigerweise eine Kontaktausnehmung des weiblichen Steckteils und ragt bevorzugt in die Steckausnehmung im Innenraum des weiblichen Steckteils hinein. Auf diese Weise kann das männliche Steckteil beim Einsteckvorgang mit dem Kontaktfortsatz direkt und/oder indirekt wechselwirken, so dass die Blende verschoben wird. Kontaktausnehmung meint in diesem Zusammenhang insbesondere eine Ausnehmung, die der Kontaktfortsatz der Blende zweckmäßigerweise von der Außenoberfläche des weiblichen Steckteils aus durchgreifen kann um auf diese Weise in den Innenraum bzw. die Steckausnehmung des weiblichen Steckteils hineinzuragen.

Es liegt im Rahmen der Erfindung, dass das männliche Steckteil zumindest ein Zentrierelement aufweist, dass im fixierten bzw. vollständig eingesteckten Zustand des männlichen Steckteils in eine, vorzugsweise an der Innenoberfläche des weiblichen Steckteils angeordnete, Formschlussausnehmung des weiblichen Steckteils eingreift. Zweckmäßigerweise ragt das zumindest eine Zentrierelement aus der Außenoberfläche des männlichen Steckteils hervor und greift in eine Formschlussausnehmung an der Innenoberfläche der Steckausnehmung des weiblichen Steckteils ein. Gemäß bevorzugter Ausführungsform der Erfindung weist das männliche Steckteil an seiner Außenoberfläche zwei Zentrierelemente auf, die vorzugsweise gegenüberliegend an der Außenoberfläche des männlichen Steckteils angeordnet sind und bevorzugt in zwei komplementäre Formschlussausnehmungen an der Innenoberfläche der Steckausnehmung des weiblichen Steckteils eingreifen.

Gemäß einer bevorzugten Ausführungsform der Erfindung ist die Blende durch direkte und/oder indirekte Wechselwirkung mit dem zumindest einen Zentrierelement des männlichen Steckteils verschiebbar. Besonders bevorzugt ragt der Kontaktfortsatz der Blende in eine Formschlussausnehmung des weiblichen Steckteils hinein und ganz besonders bevorzugt wechselwirkt das Zentrierelement des männlichen Steckteils beim Einstecken des männlichen Steckteils in das weibliche Steckteil mit dem Kontaktfortsatz der Blende und wechselwirkt insbesondere direkt mit dem Kontaktfortsatz der Blende, so dass die Blende verschoben wird. Es empfiehlt sich, dass ein Zentrierelement des männlichen Steckteils den Kontaktfortsatz der Blende beim Einsteckvorgang des männlichen Steckteils in der Formschlussausnehmung direkt kontaktiert und auf diese Weise die Blende verschiebt.

Gemäß einer bevorzugten Ausführungsform des erfindungsgemäßen Verbinders weist das männliche Steckteil eine Schrägfläche auf. Zweckmäßigerweise ist die Schrägfläche an der Außenseite des männlichen Steckteils angeordnet und vorzugsweise einstückig an dem männlichen Steckteil angeformt. Empfohlenermaßen steigt die Schrägfläche des männlichen Steckteils in axialer Richtung des männlichen Steckteils an und vorzugsweise entgegen der Einsteckrichtung des männlichen Steckteils an. Axiale Richtung des männlichen Steckteils meint in diesem Zusammenhang insbesondere die Richtung der Längsachse des männlichen Steckteils. Es empfiehlt sich, dass die Schrägfläche des männlichen Steckteils um 10° bis 60°, vorzugsweise um 15° bis 50°, bevorzugt um 20° bis 45° bezüglich der Längsachse bzw. Längsmittelachse des männlichen Steckteils ansteigt. Dabei liegt es im Rahmen der Erfindung, dass die Schrägfläche den Umfang des männlichen Steckteils umläuft. Es empfiehlt sich, dass die Schrägfläche den Umfang des männlichen Steckteils um zumindest 50%, vorzugsweise um zumindest 60 %, bevorzugt um zumindest 75% und besonders bevorzugt um zumindest 90% umläuft. Ganz besonders bevorzugt umläuft die Schrägfläche den Umfang des männlichen Steckteils vollständig. Zweckmäßigerweise ist die Schrägfläche als Rampe ausgebildet, die entgegen der Einsteckrichtung des männlichen Steckteils in axialer Richtung des männlichen Steckteils ansteigt. Es hat sich bewährt, dass die Schrägfläche des männlichen Steckteils kontinuierlich und insbesondere stufenfrei ansteigt. Gemäß bevorzugter Ausführungsform weist die Schrägfläche des männlichen Steckteils auch den Anschlagflansch für den Rückhalter auf bzw. bildet die Schrägflächenrückseite den Anschlagflansch für den Rückhalter. Zweckmäßigerweise ist der Anschlagflansch in Einsteckrichtung des männlichen Steckteils vor der Schrägfläche angeordnet.

Eine besonders bevorzugte Ausführungsform des erfindungsgemäßen Verbinders ist dadurch gekennzeichnet, dass die Schrägfläche des männlichen Steckteils beim Einstecken des männlichen Steckteils in das weibliche Steckteil mit dem Kontaktfortsatz der Blende wechselwirkt, insbesondere direkt wechselwirkt, so dass die Blende verschoben wird. Gemäß einer Ausführungsform der Erfindung wechselwirkt - insbesondere direkt - sowohl die Schrägfläche des männlichen Steckteils, als auch zumindest ein Zentrierelement des männlichen Steckteils beim Einstecken des männlichen Steckteils in das weibliche Steckteil mit dem Kontaktfortsatz der Blende. Im Rahmen einer solchen Ausführungsform durchgreift zweckmäßigerweise der Kontaktfortsatz sowohl die Kontaktausnehmung, als auch die Formschlussausnehmung des weiblichen Steckteils und ragt derart in die Steckausnehmung bzw. den Innenraum des weiblichen Steckteils hinein, dass beim Einsteckvorgang zunächst die Schrägfläche des männlichen Steckteils mit dem Kontaktfortsatz wechselwirkt, insbesondere direkt wechselwirkt, und anschließend das Zentrierelement mit dem Kontaktfortsatz wechselwirkt, insbesondere direkt wechselwirkt.

Es liegt im Rahmen der Erfindung, dass in dem weiblichen Steckteil zumindest ein Distanzring vorgesehen ist, der im fixierten bzw. vollständig eingesteckten Zustand des männlichen Steckteils zwischen dem männlichen Steckteil und dem weiblichen Steckteil angeordnet ist. Es ist weiterhin bevorzugt, dass der Verbinder ein Dichtelement, insbesondere einen Dichtungsring aufweist, das Vorzugsweise von dem Distanzring in dem Verbinder gehalten wird. Zweckmäßigerweise ist das Dichtelement ein über den Umfang des männlichen Steckteils umlaufender Dichtungsring bzw. O-Dichtungsring und dieser Dichtungsring ist vorzugsweise in dem weiblichen Steckteil angeordnet und ist bevorzugt im fixierten bzw. vollständig eingesteckten Zustand des männlichen Steckteils zwischen dem weiblichen Steckteil und dem männlichen Steckteil vorgesehen. Zweckmäßigerweise ist der Distanzring in Einsteckrichtung des männlichen Steckteils vor dem zumindest einen Dichtelement, bevorzugt vor dem zumindest einen Dichtungsring angeordnet.

Empfohlenermaßen ist die Blende, bevorzugt mittels des Kontaktfortsatzes, an dem Distanzring befestigt. Besonders bevorzugt ist der Distanzring im unfixierten Zustand des männlichen Steckteils noch nicht in seiner Endposition in dem weiblichen Steckteil angeordnet und ganz besonders bevorzugt wird der Distanzring beim Einstecken des männlichen Steckteils in das weibliche Steckteil zusammen mit der Blende in seine Endposition verschoben. In der Endposition hält der Distanzring das Dichtelement bzw. den Dichtungsring vorzugsweise in dem Verbinder bzw. in dem weiblichen Steckteil. Empfohlenermaßen ist der Distanzring in seiner Endposition mit dem weiblichen Steckteil verrastet. Die vorzugsweise vorgesehene Befestigung der Blende an dem Distanzring mittels des Kontaktfortsatzes ist empfohlenermaßen derart ausgeführt, dass der Kontaktfortsatz durch die Kontaktausnehmung des weiblichen Steckteils in die Steckausnehmung bzw. in den Innenraum des weiblichen Steckteils hineinragt und dort in eine entsprechende Befestigungsausnehmung des Distanzringes eingreift bzw. in dieser fixiert ist. Beim Einstecken des männlichen Steckteils in das weibliche Steckteil wechselwirkt das männliche Steckteil zweckmäßigerweise mit dem Distanzring und zwar bevorzugt mittels der Schrägfläche. Es ist bevorzugt, dass das männliche Steckteil mittels seiner Schrägfläche den Distanzring direkt kontaktiert und auf diese Weise indirekt mit dem vorzugsweise an dem Distanzring befestigten Kontaktfortsatz der Blende wechselwirkt, so dass die Blende verschoben wird.

Eine Ausführungsform, der im Rahmen der Erfindung ganz besondere Bedeutung zukommt ist dadurch gekennzeichnet, dass der Verbinder zumindest ein Rückstellelement, insbesondere zumindest eine Feder aufweist. Das Rückstellelement bzw. die Feder ist zweckmäßigerweise zwischen dem weiblichen Steckteil und der Blende angeordnet und wird vorzugsweise beim Einstecken des männlichen Steckteils in das weibliche Steckteil gespannt, so dass die Blende beim Lösen des männlichen Steckteils von dem weiblichen Steckteil durch die Rückstellkraft in ihre Ausgangsposition zurückgeschoben wird. Bevorzugt handelt es sich bei dem Rückstellelement bzw. der Feder um eine Torsionsfeder und/oder um eine Biegefeder. Bei dem Rückstellelement bzw. der Feder kann es sich besonders bevorzugt um eine Schraubenfeder handeln. Gemäß einer Ausführungsform handelt es sich bei dem Rückstellelement bzw. der Feder um eine Blattfeder, eine Spiralfeder oder dergleichen. Die Feder bzw. Schraubenfeder wird beim Einstecken des männlichen Steckteils in das weibliche Steckteil entweder durch Kompression oder durch Expansion gespannt. Wenn die ordnungsgemäße Fixierung des männlichen Steckteils in dem weiblichen Steckteil gelöst wird, um die Verbindung zu trennen, wird die Blende durch die Rückstellkraft dann wieder in ihre Ausgangsposition zurückgeschoben. Auf diese Weise wird erreicht, dass der Verifikationsvorgang und insbesondere die eindeutige Anzeige der ordnungsgemäßen Fixierung des männlichen Steckteils in dem weiblichen Steckteil reversibel ist und beim erneuten Verbinden der Steckteile nochmals verwendet werden kann. Im Rahmen dieser Ausführungsform ist somit nach dem Lösen des männlichen Steckteils von dem weiblichen Steckteil und der Wiederherstellung des unfixierten Zustandes das Verifikationselement bzw. der Code wieder zumindest bereichsweise verdeckt und/oder unvollständig und nicht auslesbar bzw. nicht korrekt auslesbar. Der Ausführungsform der Erfindung mit zumindest einem Rückstellelement, insbesondere mit zumindest einer Feder kommt insbesondere dann Bedeutung zu, wenn der Kontaktfortsatz der Blende in die Formschlussausnehmung des weiblichen Steckteils hineinragt und beim Einsteckvorgang des männlichen Steckteils durch die Wechselwirkung, insbesondere die direkte Wechselwirkung eines Zentrierelementes des männlichen Steckteils mit dem Kontaktfortsatz verschoben wird. Beim Lösen des männlichen Steckteils von dem weiblichen Steckteil kann dann zweckmäßigerweise - veranlasst durch die Rückstellkraft - der Kontaktfortsatz in der Kontaktausnehmung und in der Formschlussausnehmung des weiblichen Steckteils zusammen mit der Blende zurück in die Ausgangsposition der Blende gelangen.

Es ist bevorzugt, dass das Rückstellelement bzw. die Feder mit einem ersten Federende an einer Anschlagfläche des weiblichen Steckteils anliegt und mit einem zweiten Federende an einer Anschlagfläche der Blende anliegt. Zweckmäßigerweise erstreckt sich das Rückstellelement bzw. die Feder in axialer Richtung des männlichen Steckteils und/oder des weiblichen Steckteils. Es ist bevorzugt, dass das Rückstellelement bzw. die Feder in Einsteckrichtung des männlichen Steckteils hinter dem Verifikationselement bzw. dem Code angeordnet ist. Wenn die Blende gemäß bevorzugter Ausführungsform als Lochblende ausgestaltet ist und zweckmäßigerweise zumindest eine Ausnehmung aufweist, durch die das Verifikationselement bzw. der Code im fixierten Zustand des männlichen Steckteils auslesbar ist, ist das Rückstellelement bzw. die Feder in Einsteckrichtung des männlichen Steckteils vorzugsweise hinter der Ausnehmung der Blende angeordnet.

Der Ausführungsform des erfindungsgemäßen Verbinders mit zumindest einem Rückstellelement liegt weiterhin die Erkenntnis zugrunde, dass der Verifikationsvorgang nicht nur mehrfach durchführbar ist und somit reversibel ist, sondern dass auch eine versehentliche Verschiebung der Blende, beispielsweise im Zuge der Montage, automatisch durch die Federrückstellkraft rückgängig gemacht wird, weil die Blende erst nach der ordnungsgemäßen Fixierung des männlichen Steckteils in dem weiblichen Steckteil durch den Rückhalter nicht mehr in ihre Ausgangsposition zurück gelangen kann.

Gemäß einer weiteren Ausführungsform des erfindungsgemäßen Verbinders ist das zumindest eine Rückstellelement bzw. die zumindest eine Feder im unfixierten Zustand des männlichen Steckteils bereits gespannt bzw. vorgespannt. Wenn das männliche Steckteil vollständig in das weibliche Steckteil eingesteckt und durch den Rückhalter an dem weiblichen Steckteil fixiert wird und somit eine korrekte und ordnungsgemäße Verbindung der beiden Steckteile vorliegt, wird vorzugsweise in diesem Zuge das Federelement freigegeben bzw. gelöst, so dass die Blende durch die Rückstellkraft der Feder derart verschoben wird, dass das Verifikationselement bzw. der Code vollständig ist und/oder auslesbar ist. Im Rahmen dieser Ausführungsform ist somit das Verifikationselement bzw. der Code im unfixierten Zustand des männlichen Steckteils verdeckt und nicht auslesbar und/oder unvollständig und nicht auslesbar und das Rückstellelement bzw. die Feder ist vorzugsweise gespannt bzw. vorgespannt. Empfohlenermaßen wird beim Einsteckvorgang des männlichen Steckteils in das weibliche Steckteil und insbesondere im Zuge der korrekten bzw. ordnungsgemäßen Fixierung des männlichen Steckteils an dem weiblichen Steckteil das Rückstellelement bzw. die Feder freigegeben bzw. gelöst und die Blende wird veranlasst durch die Rückstellkraft verschoben, so dass das Verifikationselement bzw. der Code vollständig ist und/oder auslesbar ist.

Es liegt im Rahmen der Erfindung, dass das Verifikationselement bzw. der Code durch zumindest ein Verfahren ausgewählt aus der Gruppe: "Drucken, Laserbeschriften, Etikettieren, Gravieren" auf das weibliche Steckteil aufgebracht ist.

Gemäß einer bevorzugten Ausführungsform der Erfindung enthält das Verifikationselement bzw. der Code auslesbare Informationen betreffend den Verbinder, insbesondere betreffend den Hersteller und/oder die Artikelnummer und/oder den Typ und/oder das Material und/oder das Herstellungsdatum und/oder die Batch-Nummer des Verbinders. Dieser Ausführungsform liegt die Erkenntnis zugrunde, dass, sobald die Verbindung zwischen dem männlichen Steckteil und dem weiblichen Steckteil ordnungsgemäß hergestellt wurde, nicht nur durch ein Auslesen des Verifikationselementes bzw. des Codes eindeutig feststellbar ist, dass die Verbindung korrekt hergestellt wurde, sondern dass bei dem Auslesen auch weitere Informationen betreffend den Verbinder auslesbar sind. Derartige Informationen sind im Zuge der Montage und/oder der Wartung des Verbinders sehr vorteilhaft, so dass die Erfindung die Verifikation der korrekten Verbindung und das Auslesen verbinderspezifischer Informationen kombiniert. Gemäß einer weiteren bevorzugten Ausführungsform der Erfindung enthält das Verifikationselement bzw. der Code einen Error-Proof-Code. Dabei handelt es sich um einen Code, der explizit aussagt, dass die Verbindung zwischen männlichem und weiblichem Steckteil korrekt hergestellt wurde.

Der Erfindung liegt die Erkenntnis zugrunde, dass mit dem erfindungsgemäßen Verbinder die ordnungsgemäße Verbindung des männlichen Steckteils an dem weiblichen Steckteil zuverlässig und eindeutig angezeigt wird. Erfindungsgemäß ist das zumindest eine Verifikationselement bzw. der zumindest eine Code im unfixierten Zustand des männlichen Steckteils nicht bzw. nicht korrekt auslesbar. Erst nach der korrekten Fixierung des männlichen Steckteils an dem weiblichen Steckteil ist das zumindest eine Verifikationselement bzw. der zumindest eine Code auslesbar, so dass auf diese Weise die ordnungsgemäße Verbindung eindeutig verifiziert werden kann. Dazu wird erfindungsgemäß eine Blende verwendet, die im Zuge des Einsteckvorganges des männlichen Steckteils verschoben wird und auf diese Weise den Code freigibt und/oder vervollständigt, so dass dieser auslesbar ist bzw. wird. Diese eindeutige Anzeige der ordnungsgemäßen Verbindung der Steckteile bzw. die Verifikation der ordnungsgemäßen Verbindung wird erfindungsgemäß durch sehr einfache Maßnahmen erreicht, so dass der Verbinder wenig komplex aufgebaut ist und sich insoweit auch durch geringe Herstellungskosten bzw. Fertigungskosten auszeichnet. Zudem wird durch die einfache und dennoch sehr funktionssichere Bereitstellung einer Verifikation bzw. einer Anzeige der korrekten Verbindung der beiden Steckteile die Fehleranfälligkeit bei der Verbindung erheblich reduziert, so dass Verbindungsfehler weitgehend ausgeschlossen werden können. Wenn gemäß bevorzugter Ausführungsform das Verifikationselement zumindest ein Code, insbesondere ein Barcode und/oder QR-Code und/oder ein DataMatrix-Code ist, kann dieser Code, beispielsweise mit einem Auslesegerät, nach der Fixierung des männlichen Steckteils an dem weiblichen Steckteil ausgelesen werden und der Code kann in vorteilhafterweise Informationen, die den Verbinder betreffen enthalten. Diese Informationen können dann beim Auslesevorgang mit ausgelesen werden. Zweckmäßigerweise ist das Auslesen dieser Informationen nur dann möglich, wenn die Verbindung zwischen männlichem Steckteil und weiblichem Steckteil ordnungsgemäß hergestellt wurde. Es ist weiterhin zu betonen, dass die für derartige Verbinder einschlägigen Normen mit dem erfindungsgemäßen Verbinder problemlos eingehalten werden.

Nachfolgend wird die Erfindung anhand einer lediglich ein Ausführungsbeispiel darstellenden Zeichnung näher erläutert. Es zeigen in schematischer Darstellung:
- Fig. 1:: Den erfindungsgemäßen Verbinder in einer ersten Ausführungsform in einer Übersichtsdarstellung
- Fig. 2A:: eine perspektivische Ansicht eines Längsschnittes durch den erfindungsgemäßen Verbinder in einer ersten Ausführungsform im unfixierten Zustand des männlichen Steckteils
- Fig. 2B:: den Gegenstand gemäß Fig. 2A im fixierten Zustand des männlichen Steckteils
- Fig. 3A:: eine perspektivische Ansicht eines Längsschnittes durch den erfindungsgemäßen Verbinder in einer zweiten Ausführungsform im unfixierten Zustand des männlichen Steckteils
- Fig. 3B:: den Gegenstand gemäß Fig. 3A im fixierten Zustand des männlichen Steckteils
- Fig. 4A:: eine perspektivische Ansicht eines Längsschnittes durch den erfindungsgemäßen Verbinder in einer dritten Ausführungsform im unfixierten Zustand des männlichen Steckteils
- Fig. 4B:: den Gegenstand gemäß Fig. 4A im fixierten Zustand des männlichen Steckteils
- Fig. 5A:: eine perspektivische Ansicht eines Längsschnittes durch den erfindungsgemäßen Verbinder in einer vierten Ausführungsform im unfixierten Zustand des männlichen Steckteils
- Fig. 5B:: den Gegenstand gemäß Fig. 5A im fixierten Zustand des männlichen Steckteils.

Die Figuren zeigen einen Verbinder 1 zum Verbinden zweier fluidführender Elemente, insbesondere zum Verbinden von zwei Kraftfahrzeugrohrleitungen 2, 3. Der Verbinder 1 weist ein weibliches Steckteil 4 und ein in das weibliche Steckteil 4 einsteckbares männliches Steckteil 5 auf. An den erfindungsgemäßen Verbinder 1 ist ein Rückhalter 6 angeschlossen, mit dem das männliche Steckteil 5 an dem weiblichen Steckteil 4 fixierbar ist. Bei dem in den Figuren dargestellten Verbinder 1 handelt es sich um einen sogenannten VDA-Verbinder. Empfohlenermaßen sind das weibliche Steckteil 4 und das männliche Steckteil 5 aus zumindest einem Kunststoff hergestellt und bevorzugt bestehen das männliche Steckteil 5 und das weibliche Steckteil 4 aus Polyphenylensulfid bzw. im Wesentlichen aus Polyphenylensulfid. Vorzugsweise besteht der Rückhalter 6 aus Stahl bzw. im Wesentlichen aus Stahl.

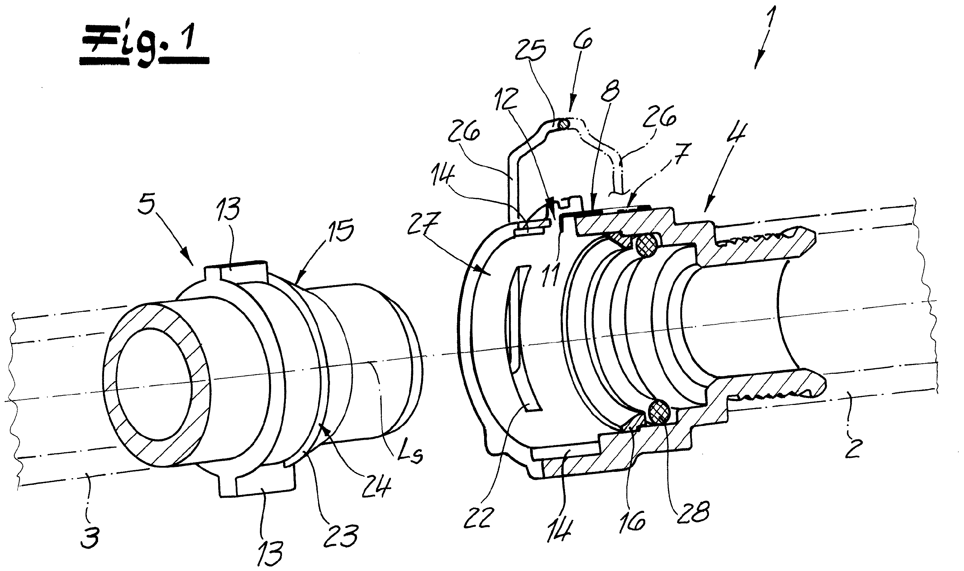

Zweckmäßigerweise und im Ausführungsbeispiel weist das weibliche Steckteil 4 zwei sich gegenüberliegende Rückhalterausnehmungen 22 auf, die als Rückhalterschlitze ausgebildet sind. Dies ist insbesondere in der Fig. 1 zu erkennen. Empfohlenermaßen und im Ausführungsbeispiel weist das männliche Steckteil 5 eine Schrägfläche 15 auf, die in axialer Richtung des männlichen Steckteils 5 entgegen der Einsteckrichtung des männlichen Steckteils 5 ansteigt. Axiale Richtung des männlichen Steckteils 5 meint dabei insbesondere die Richtung der Längsachse Ls des männlichen Steckteils 5. Im Ausführungsbeispiel gemäß den Figuren steigt die Schrägfläche 15 um etwa 30° entgegen der Einsteckrichtung des männlichen Steckteils 5 an. Das männliche Steckteil 5 ist im fixierten bzw. vollständig eingesteckten Zustand über den Rückhalter 6 an dem weiblichen Steckteil 4 fixiert. Bei dem Rückhalter 6 handelt es sich bevorzugt und im Ausführungsbeispiel um einen U-förmigen Rückhalter. Der U-förmige Rückhalter 6 hintergreift im fixierten bzw. vollständig eingesteckten Zustand des männlichen Steckteils 5 vorzugsweise einen Anschlagflansch 23 des männlichen Steckteils 5 und greift bevorzugt und im Ausführungsbeispiel in eine Fixierungsnut 24 des männlichen Steckteils 5 ein.

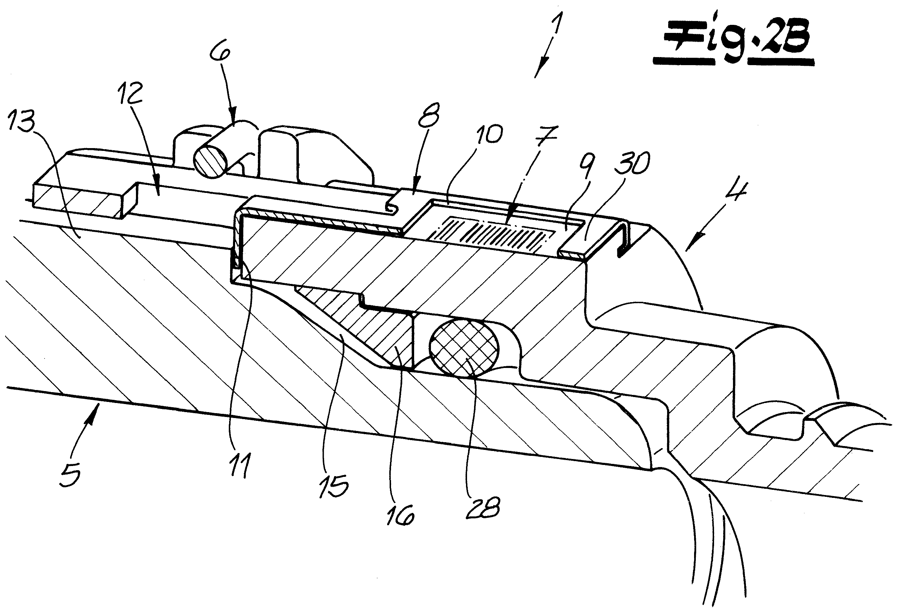

Empfohlenermaßen und im Ausführungsbeispiel ist der U-förmige Rückhalter 6 mit einem U-Bügel 25 und zwei an dem U-Bügel 25 angeschlossenen U-Schenkeln 26 ausgeführt (Fig. 1). Zweckmäßigerweise und im Ausführungsbeispiel durchgreifen die U-Schenkel 26 im vollständig eingesteckten bzw. fixierten Zustand des männlichen Steckteils 5 jeweils eine Rückhalterausnehmung 22 des weiblichen Steckteils 4 bzw. durchgreifen diese Rückhalterausnehmung 22 jeweils vollständig. Dabei hintergreifen die U-Schenkel 26 zweckmäßigerweise den Anschlagflansch 23 des männlichen Steckteils 5 und greifen insbesondere in die Fixierungsnut 24 des männlichen Steckteils 5 ein. In diesem Zustand (Fig. 2B, 3B, 4B und 5B) ist das männliche Steckteil 5 vollständig bzw. ordnungsgemäß an dem weiblichen Steckteil 4 fixiert.

Im Rahmen der Erfindung und im Ausführungsbeispiel ist im Übrigen der Anschlagflansch 23 in Einsteckrichtung des männlichen Steckteils 5 vor der Schrägfläche 15 des männlichen Steckteils 5 angeordnet und insbesondere weist die Schrägflächenrückseite den Anschlagflansch 23 auf bzw. bildet den Anschlagflansch 23 (Fig. 1).

Im Rahmen der Erfindung und im Ausführungsbeispiel weist das männliche Steckteil 5 zwei Zentrierelemente 13 auf, die im fixierten bzw. vollständig eingesteckten Zustand des männlichen Steckteils 5 in jeweils eine Formschlussausnehmung 14 des weiblichen Steckteils 4 eingreifen. Im Ausführungsbeispiel gemäß den Figuren ragen die Zentrierelemente 13 aus der Außenoberfläche des männlichen Steckteils 5 hervor und greifen in jeweils eine Formschlussausnehmung 14 an der Innenoberfläche einer Steckausnehmung 27 des weiblichen Steckteils 4 ein. Die Zentrierelemente 13 sind dabei zweckmäßigerweise und im Ausführungsbeispiel gegenüberliegend an der Außenoberfläche des männlichen Steckteils 5 angeordnet und greifen bevorzugt in zwei komplementäre Formschlussausnehmungen 14 an der Innenoberfläche der Steckausnehmung 27 des weiblichen Steckteils 4 ein.

Im Rahmen der Erfindung und im Ausführungsbeispiel weist der Verbinder 1 einen Dichtungsring 28 als Dichtelement auf, der im fixierten Zustand des männlichen Steckteils 5 von einem Distanzring 16 in dem Verbinder 1 gehalten wird. Der Distanzring 16 ist im fixierten Zustand des männlichen Steckteils 5 vorzugsweise und im Ausführungsbeispiel mit dem weiblichen Steckteil 4 verrastet.

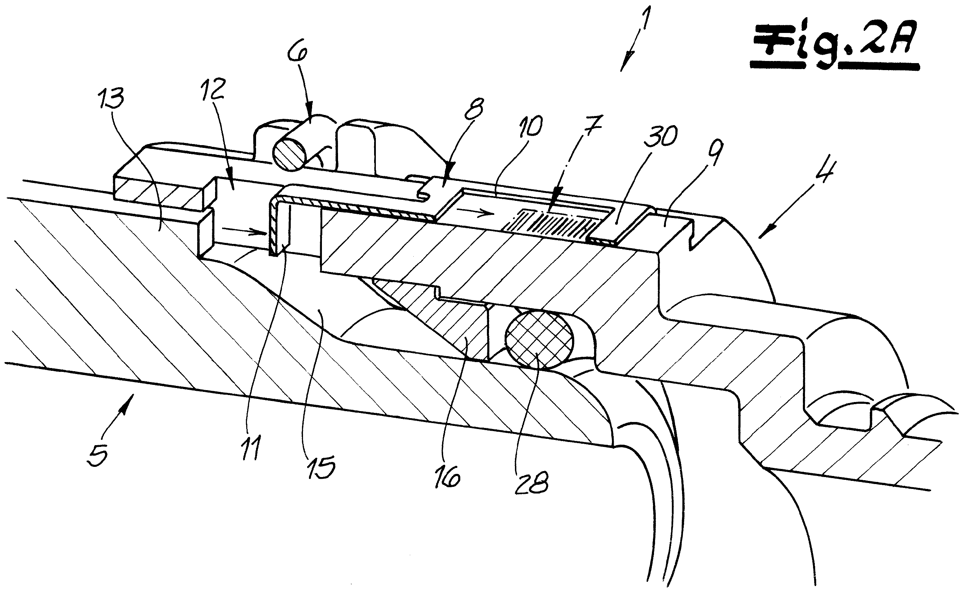

Erfindungsgemäß weist das weibliche Steckteil 4 zumindest ein Verifikationselement auf. Im Ausführungsbeispiel gemäß den Fig. 1 bis 4B ist das Verifikationselement in Form eines Codes 7 ausgebildet, der im unfixierten Zustand des männlichen Steckteils 5 bereichsweise von einer an dem weiblichen Steckteil 4 angeordneten Blende 8 verdeckt und nicht auslesbar ist. Dies ist in den Fig. 2A, 3A und 4A dargestellt. Die Blende 8 wird erfindungsgemäß beim Einstecken des männlichen Steckteils 5 in das weibliche Steckteil 4 derart verschoben, dass das Verifikationselement bzw. der Code 7 im fixierten bzw. vollständig eingesteckten Zustand des männlichen Steckteils 5 vollständig ist und/oder auslesbar ist. Im Ausführungsbeispiel gemäß den Fig. 2B, 3B und 4B ist im vollständig eingesteckten Zustand des männlichen Steckteils 5 der Code 7 nicht mehr von der Blende 8 verdeckt, sondern freigegeben und auslesbar. Auslesbar meint im Rahmen der Erfindung insbesondere, dass das Verifikationselement bzw. der Code 7 vollständig und korrekt ausgelesen werden kann.

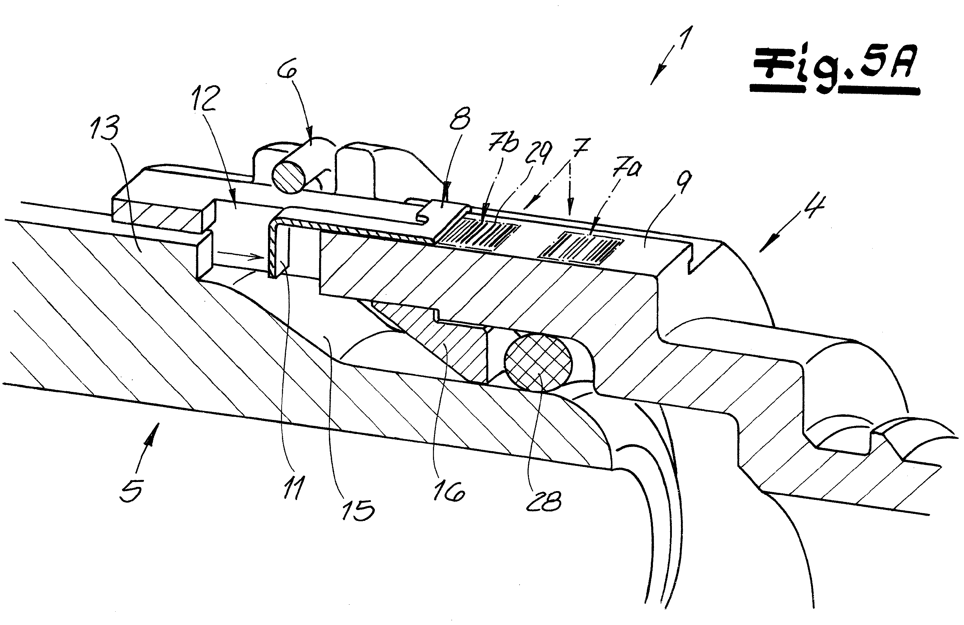

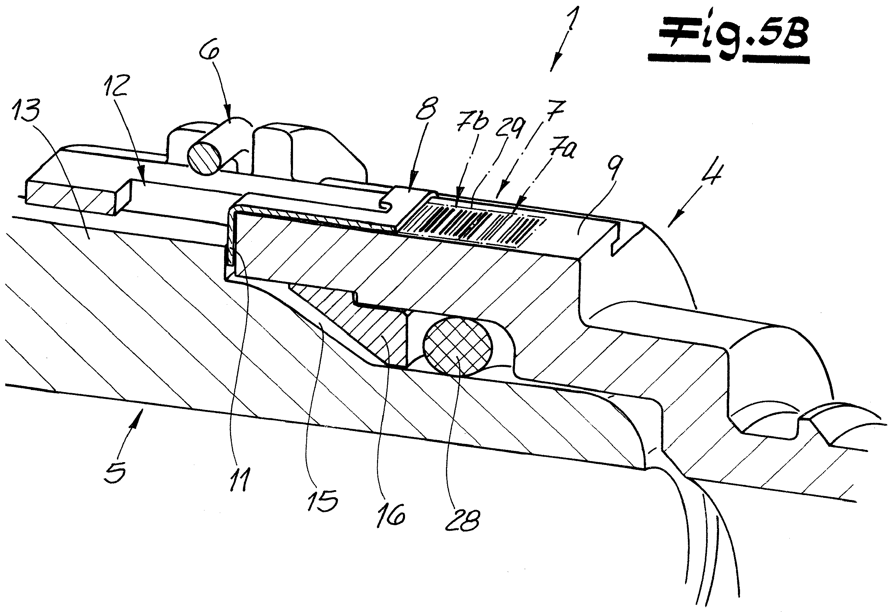

Zusätzlich oder alternativ weist das weibliche Steckteil erfindungsgemäß zumindest einen Teil eines Verifikationselementes, insbesondere und im Ausführungsbeispiel gemäß den Fig. 5A, B in Form eines Teils 7a eines Codes 7 auf, der im unfixierten Zustand des männlichen Steckteils 5 unvollständig und nicht auslesbar ist. Dies ist in der Fig. 5A dargestellt. An einer an dem weiblichen Steckteil 4 angeordneten Blende 8 ist erfindungsgemäß ein weiterer bzw. der fehlende Teil 7b des Verifikationselementes bzw. des Codes 7 angeordnet. Im Rahmen der Erfindung und im Ausführungsbeispiel gemäß den Fig. 5A, B ist der fehlende Teil 7b des Verifikationselementes bzw. des Codes 7 auf einer transparenten Folie 29 an der Blende 8 vorgesehen. Die Blende 8 wird beim Einstecken des männlichen Steckteils 5 in das weibliche Steckteil 4 erfindungsgemäß derart verschoben, dass das Verifikationselement bzw. der Code 7 im fixierten bzw. vollständig eingesteckten Zustand des männlichen Steckteils 5 vollständig ist und/oder auslesbar ist. Dazu werden im Ausführungsbeispiel gemäß den Fig. 5A, B die unterschiedlichen Teile (7a, 7b) des Verifikationselementes bzw. des Codes 7 durch die Verschiebung der Blende 8 zusammengeführt, so dass der Code 7 vervollständigt wird und auslesbar ist. Dies ist in der Fig. 5B zu erkennen.

Im Rahmen der Erfindung und im Ausführungsbeispiel gemäß den Figuren ist das Verifikationselement in Form eines Codes 7 ausgebildet. Bevorzugt handelt es sich bei dem Code um einen lesbaren Code und ganz besonders bevorzugt um einen maschinenlesbaren Code 7. Im Ausführungsbeispiel mag es sich bei dem Code 7 um einen Barcode handeln. Der Code 7 bzw. der Barcode kann, wenn eine korrekte Verbindung des männlichen Steckteils 5 mit dem weiblichen Steckteil 4 hergestellt wurde, ausgelesen werden, beispielsweise durch ein Auslesegerät wie einen Scanner oder ein Mobiltelefon. Auf diese Weise wird die ordnungsgemäße Verbindung verifiziert. Es liegt im Rahmen der Erfindung, dass der Code 7 auslesbare Informationen betreffend den Verbinder 1 enthält, die im Zuge des Auslesevorganges nach der ordnungsgemäßen Verbindung der beiden Steckteile 4, 5 auslesbar sind bzw. mit auslesbar sind.

Empfohlenermaßen und im Ausführungsbeispiel ist der Code 7 auf bzw. an der Außenoberfläche 9 des weiblichen Steckteils 4 angeordnet. Im Ausführungsbeispiel gemäß den Fig. 5A, B ist ein Teil 7a eines Codes 7 auf der Außenoberfläche 9 des weiblichen Steckteils 4 angeordnet. Zweckmäßigerweise und im Ausführungsbeispiel gemäß den Figuren ist der Code 7 unbeweglich bzw. im Wesentlichen unbeweglich an bzw. auf der Außenoberfläche 9 des weiblichen Steckteils 4 angeordnet. Dies gilt im Ausführungsbeispiel gemäß den Fig. 5A, B für den Teil 7a des Codes 7, der auf der Außenoberfläche 9 des weiblichen Steckteils 4 angeordnet ist. Der Code 7 bzw. der Teil 7a des Codes 7 der im Rahmen der Erfindung und im Ausführungsbeispiel an bzw. auf der Außenoberfläche 9 des weiblichen Steckteils 4 angeordnet ist, ist somit nicht relativ zu dem weiblichen Steckteil 4 beweglich.

Zweckmäßigerweise und im Ausführungsbeispiel wird die Blende 8 beim Einstecken des männlichen Steckteils 5 in das weibliche Steckteil 4 axial in Einsteckrichtung verschoben und empfohlenermaßen und im Ausführungsbeispiel entlang der Außenoberfläche 9 des weiblichen Steckteils 4 axial in Einsteckrichtung geführt bzw. verschoben. Bevorzugt und im Ausführungsbeispiel gemäß den Fig. 1 bis 4B ist die Blende 8 als Lochblende ausgebildet und zweckmäßigerweise ist im fixierten bzw. vollständig eingesteckten Zustand des männlichen Steckteils 5, der in den Fig. 2B, 3B und 4B dargestellt ist, der Code 7 durch eine Ausnehmung 10 der Blende 8 bzw. Lochblende auslesbar. Vorzugsweise und im Ausführungsbeispiel gemäß den Figuren ist die Blende 8 im Übrigen als plattenartiges Element ausgestaltet. Empfohlenermaßen und im Ausführungsbeispiel besteht die Blende 8 aus zumindest einem Metall bzw. im Wesentlichen aus zumindest einem Metall und ist insbesondere als Metallblech vorgesehen. Wenn die Blende 8 gemäß bevorzugter Ausführungsform und in den Fig. 1 bis 4B als Lochblende ausgebildet ist, ist der Code 7 im unfixierten Zustand des männlichen Steckteils 4 zweckmäßigerweise zumindest bereichsweise von einem die Ausnehmung 10 der Lochblende umgebenden Randbereich 30 verdeckt. Der den Code 7 verdeckende Randbereich 30 der Blende 8 bzw. Lochblende ist zweckmäßigerweise und im Ausführungsbeispiel in Einsteckrichtung des männlichen Steckteils 5 hinter der Ausnehmung 10 angeordnet. Dies ist in den Fig. 2A bis 4B zu erkennen.

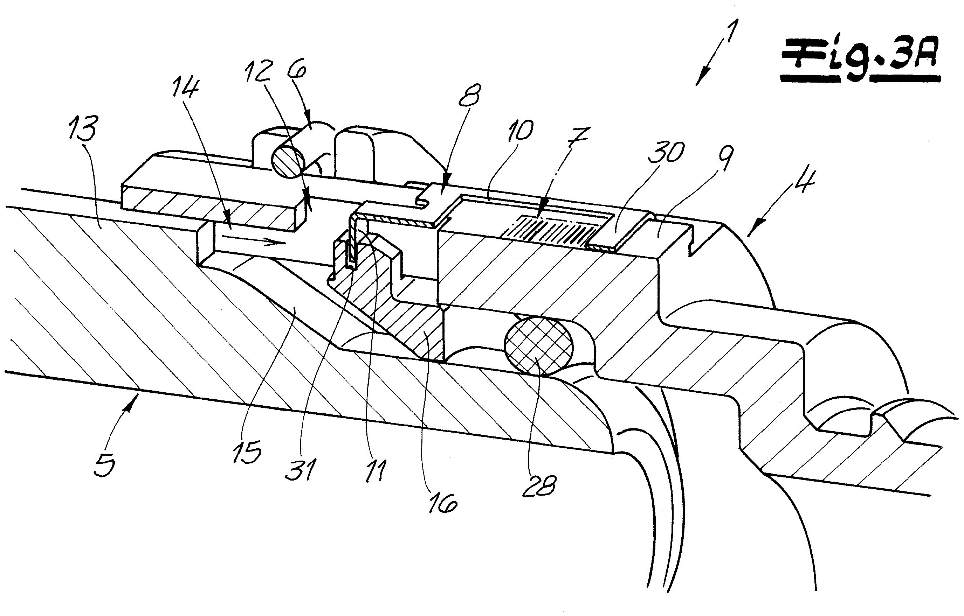

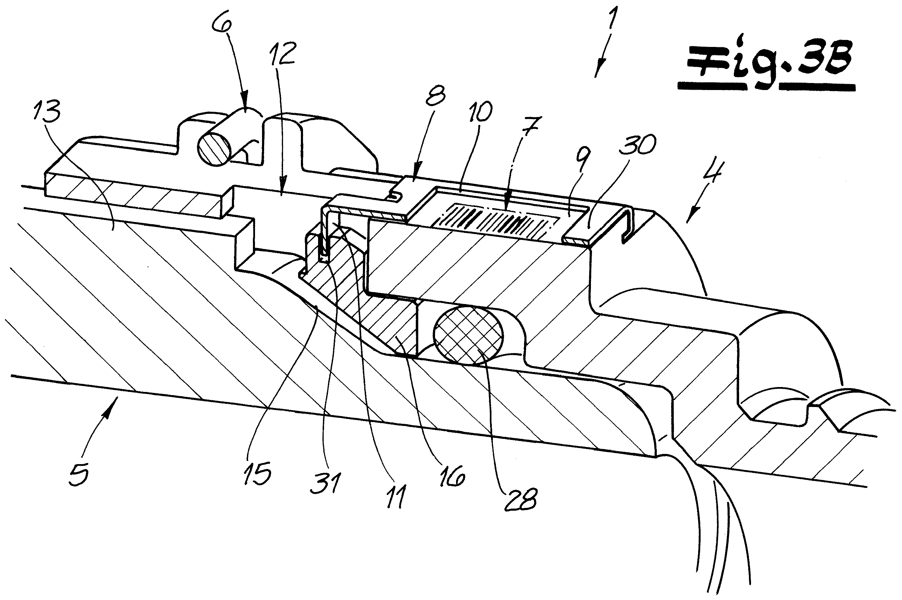

Im Rahmen der Erfindung und im Ausführungsbeispiel ist die Blende 8 durch direkte Wechselwirkung mit dem männlichen Steckteil 5 verschiebbar (Fig. 1; 2A, B; 4A, B und 5A, B) oder durch indirekte Wechselwirkung mit dem männlichen Steckteil 5 verschiebbar (Fig. 3A, B). Direkte Wechselwirkung meint in diesem Zusammenhang insbesondere, dass das männliche Steckteil 5 beim Einstecken in das weibliche Steckteil 4 direkt mit der Blende 8 wechselwirkt bzw. an dieser Blende angreift. Indirekte Wechselwirkung meint in diesem Zusammenhang insbesondere, dass das männliche Steckteil 5 beim Einstecken in das weibliche Steckteil 4 nicht direkt mit der Blende 8 wechselwirkt bzw. an dieser angreift, sondern mittels eines weiteren Elementes des Verbinders 1 mit der Blende 8 wechselwirkt.

Empfohlenermaßen und im Ausführungsbeispiel weist die Blende 8 einen Kontaktfortsatz 11 für die Wechselwirkung mit dem männlichen Steckteil 5 auf, der vorzugsweise eine Kontaktausnehmung 12 des weiblichen Steckteils 4 durchgreift und bevorzugt in den Innenraum des weiblichen Steckteils 4 hineinragt.

Zweckmäßigerweise und im Ausführungsbeispiel gemäß den Fig. 1; 2A, B; 4A, B und 5A, B ragt der Kontaktfortsatz 11 der Blende 8 in eine Formschlussausnehmung 14 des weiblichen Steckteils 4 hinein. Beim Einstecken des männlichen Steckteils 5 in das weibliche Steckteil 4 wechselwirkt ein Zentrierelement 13 des männlichen Steckteils 5 vorzugsweise und im Ausführungsbeispiel gemäß den Fig. 1; 2A, B; 4A, B und 5A, B direkt mit dem Kontaktfortsatz 11, so dass die Blende 8 verschoben wird.

Im Ausführungsbeispiel gemäß den Fig. 3A, B ist die Blende 8 mittels des Kontaktfortsatzes 11 an dem Distanzring 16 befestigt. Dazu ragt der Kontaktfortsatz 11 durch die Kontaktausnehmung 12 des weiblichen Steckteils 4 in die Steckausnehmung 27 des weiblichen Steckteils 4 hinein und greift in eine Befestigungsausnehmung 31 des Distanzringes 16 ein bzw. ist in dieser fixiert. Zweckmäßigerweise und im Rahmen dieser Ausführungsform ist der Distanzring 16 im unfixierten Zustand des männlichen Steckteils 5 (Fig. 3A) noch nicht in seiner Endposition in dem weiblichen Steckteil 4 angeordnet. Beim Einstecken des männlichen Steckteils 5 in das weibliche Steckteil 4 wird der Distanzring 16 zweckmäßigerweise und im Ausführungsbeispiel gemäß den Fig. 3A, B zusammen mit der Blende 8 in seine Endposition verschoben und ist dort vorzugsweise mit dem weiblichen Steckteil 4 verrastet (Fig. 3B). Im Rahmen der Erfindung und im Ausführungsbeispiel gemäß den Fig. 3A, B kontaktiert das männliche Steckteil 5 mittels seiner Schrägfläche 15 direkt den Distanzring 16 und wechselwirkt auf diese Weise indirekt mit dem Kontaktfortsatz 11 der Blende 8, so dass die Blende 8 beim Einstecken des männlichen Steckteils 5 verschoben wird.

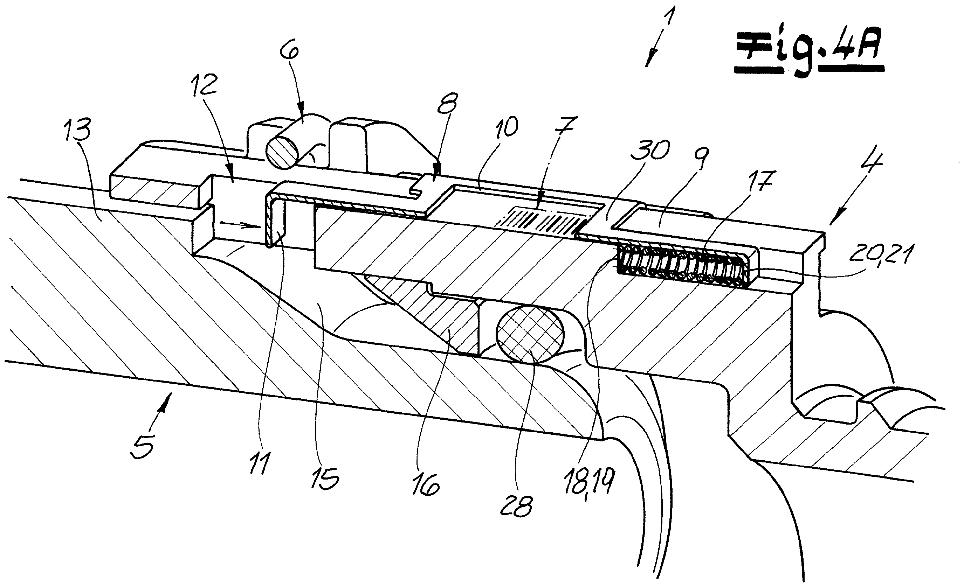

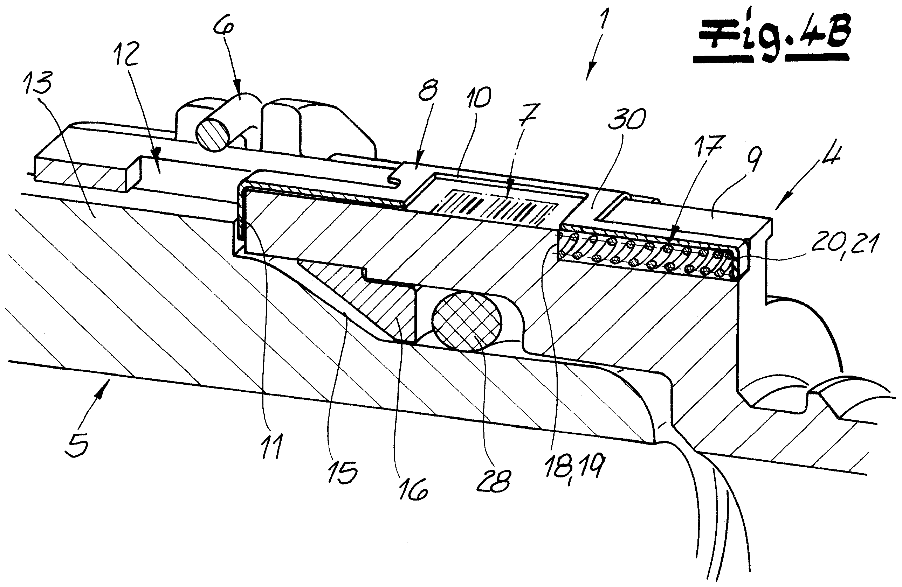

In den Fig. 4A, B ist eine weitere bevorzugte Ausführungsform der Erfindung dargestellt, in der der Verbinder 1 eine Feder 17 als Rückstellelement aufweist, die zweckmäßigerweise und im Ausführungsbeispiel zwischen dem weiblichen Steckteil 4 und der Blende 8 angeordnet ist. Die Feder 17 wird empfohlenermaßen und im Ausführungsbeispiel beim Einstecken des männlichen Steckteils 5 in das weibliche Steckteil 4 gespannt. Im Ausführungsbeispiel gemäß den Fig. 4A, B handelt es sich bei der Feder 17 um eine Schraubenfeder, die beim Einstecken des männlichen Steckteils 5 in das weibliche Steckteil 4 expandiert und dadurch gespannt wird. Beim Lösen des männlichen Steckteils 5 von dem weiblichen Steckteil 4 wird die Blende 8 empfohlenermaßen durch die Rückstellkraft in ihre Ausgangsposition zurückgeschoben. Auf diese Weise wird erreicht, dass der Verifikationsvorgang und insbesondere die eindeutige Anzeige der ordnungsgemäßen Fixierung des männlichen Steckteils 5 an dem weiblichen Steckteil 4 reversibel ist und dass beim erneuten Verbinden der Steckteile 4, 5 der Verifikationsvorgang erneut durchgeführt werden kann. Nach dem Lösen des männlichen Steckteils 5 von dem weiblichen Steckteil 4 ist der Code 7 dann wieder zumindest bereichsweise von der Blende 8 verdeckt. Im Rahmen der Erfindung und im Ausführungsbeispiel gemäß den Fig. 4A, B kann der Kontaktfortsatz 11 beim Lösen des männlichen Steckteils 5 von dem weiblichen Steckteil 4 in der Kontaktausnehmung 12 und in der Formschlussausnehmung 14 des weiblichen Steckteils 4 zusammen mit der Blende 8 zurück in die Ausgangsposition der Blende 8 gelangen.

Empfohlenermaßen und im Ausführungsbeispiel gemäß den Fig. 4A, B liegt die Feder 17 mit einem ersten Federende 18 an einer Anschlagfläche 19 des weiblichen Steckteils 4 an und liegt zweckmäßigerweise mit einem zweiten Federende 20 an einer Anschlagfläche 21 der Blende 8 an. Die Feder 17 ist im Übrigen im Rahmen der Erfindung und im Ausführungsbeispiel gemäß den Fig. 4A, B in Einsteckrichtung des männlichen Steckteils 5 hinter dem Code 7 angeordnet. Die Feder 17 erstreckt sich darüber hinaus im Rahmen der Erfindung und im Ausführungsbeispiel in axialer Richtung des männlichen Steckteils 5 und des weiblichen Steckteils 4.

Es ist bevorzugt, dass das Verifikationselement bzw. der Code 7 durch zumindest ein Verfahren ausgewählt aus der Gruppe: "Drucken, Laserbeschriften, Etikettieren, Gravieren" auf das weibliche Steckteil 4 aufgebracht ist. In den Ausführungsbeispielen gemäß den Figuren mag der Code 7 (Fig. 1 bis 4B) bzw. der Teil 7a eines Codes 7 (Fig. 5A, B) durch Drucken auf das weibliche Steckteil 4 bzw. auf die Außenoberfläche 9 des weiblichen Steckteil 4 aufgebracht sein.

## Patentansprüche

1. Verbinder (1) zum Verbinden zweier fluidführender Elemente, insbesondere zum Verbinden von zwei Kraftfahrzeugrohrleitungen (2, 3), mit einem weiblichen Steckteil (4) und einem in das weibliche Steckteil (4) einsteckbaren männlichen Steckteil (5), wobei an dem weiblichen Steckteil (4) ein Rückhalter (6) angeschlossen ist, mit dem das männliche Steckteil (5) an dem weiblichen Steckteil (4) fixierbar ist, **dadurch gekennzeichnet, dass**
das weibliche Steckteil (4) zumindest ein Verifikationselement, insbesondere in Form eines Codes (7), aufweist das im unfixierten Zustand des männlichen Steckteils (5) zumindest bereichsweise von zumindest einer an dem weiblichen Steckteil (4) angeordneten Blende (8) verdeckt und nicht auslesbar ist
und/oder das weibliche Steckteil (4) zumindest einen Teil eines Verifikationselementes, insbesondere in Form eines Teils (7a) eines Codes (7), aufweist wobei das Verifikationselement bzw. der Code (7) im unfixierten Zustand des männlichen Steckteils (5) unvollständig und nicht auslesbar ist und wobei an zumindest einer an dem weiblichen Steckteil (4) angeordneten Blende (8) zumindest ein weiterer bzw. der fehlende Teil (7b) des Verifikationselementes bzw. des Codes (7) angeordnet ist,
wobei die zumindest eine Blende (8) beim Einstecken des männlichen Steckteils (5) in das weibliche Steckteil (4) derart verschoben wird, dass das Verifikationselement bzw. der Code (7) im fixierten bzw. vollständig eingesteckten Zustand des männlichen Steckteils (5) vollständig ist und/oder auslesbar ist.

2. Verbinder nach Anspruch 1, wobei das Verifikationselement bzw. der Code (7) ein lesbarer Code, insbesondere ein maschinenlesbarer Code, bevorzugt ein QR-Code und/oder ein Barcode und/oder ein DataMatrix-Code ist.

3. Verbinder nach einem der Ansprüche 1 oder 2, wobei das Verifikationselement bzw. der Code (7) auf der Außenoberfläche (9) des weiblichen Steckteils (4) angeordnet ist.

4. Verbinder nach einem der Ansprüche 1 bis 3, wobei das Verifikationselement bzw. der Code (7) unbeweglich bzw. im Wesentlichen unbeweglich auf dem weiblichen Steckteil (4), insbesondere auf der Außenoberfläche (9) des weiblichen Steckteils (4), angeordnet ist.

5. Verbinder nach einem der Ansprüche 1 bis 4, wobei die Blende (8) beim Einstecken des männlichen Steckteils (5) in das weibliche Steckteil (4) axial in Einsteckrichtung verschoben wird und vorzugsweise entlang der Außenoberfläche (9) des weiblichen Steckteils (4) axial in Einsteckrichtung geführt wird.

6. Verbinder nach einem der Ansprüche 1 bis 5, wobei die Blende (8) als Lochblende ausgebildet ist und wobei vorzugsweise im fixierten bzw. vollständig eingesteckten Zustand des männlichen Steckteils (5) das Verifikationselement beziehungsweise der Code (7) durch zumindest eine Ausnehmung (10) der Lochblende auslesbar ist.

7. Verbinder nach einem der Ansprüche 1 bis 6, wobei die Blende (8) durch direkte und/oder indirekte Wechselwirkung mit dem männlichen Steckteil (5) verschiebbar ist.

8. Verbinder nach einem der Ansprüche 1 bis 7, wobei die Blende (8) zumindest einen Kontaktfortsatz (11) für die Wechselwirkung mit dem männlichen Steckteil (5) aufweist, wobei der Kontaktfortsatz (11) vorzugsweise eine Kontaktausnehmung (12) des weiblichen Steckteils (4) durchgreift und bevorzugt in den Innenraum des weiblichen Steckteils (4) hineinragt.

9. Verbinder nach Anspruch 8, wobei das männliche Steckteil (5) zumindest ein Zentrierelement (13) aufweist, das im fixierten bzw. vollständig eingesteckten Zustand des männlichen Steckteils (5) in eine, vorzugsweise an der Innenoberfläche des weiblichen Steckteils (4) angeordnete, Formschlussausnehmung (14) des weiblichen Steckteils (4) eingreift, wobei der Kontaktfortsatz (11) der Blende (8) in die Formschlussausnehmung (14) des weiblichen Steckteils (4) hineinragt und wobei das Zentrierelement (13) des männlichen Steckteils (5) beim Einstecken des männlichen Steckteils (5) in das weibliche Steckteil (4) mit dem Kontaktfortsatz (11) wechselwirkt, insbesondere direkt wechselwirkt, sodass die Blende (8) verschoben wird.

10. Verbinder nach einem der Ansprüche 8 oder 9, wobei das männliche Steckteil (5) eine Schrägfläche (15) aufweist, die beim Einstecken des männlichen Steckteils (5) in das weibliche Steckteil (4) mit dem Kontaktfortsatz (11) der Blende (8) wechselwirkt, insbesondere direkt wechselwirkt, so dass die Blende (8) verschoben wird.

11. Verbinder nach einem der Ansprüche 8 bis 10, wobei in dem weiblichen Steckteil (4) zumindest ein Distanzring (16) vorgesehen ist, der im fixierten bzw. vollständig eingesteckten Zustand des männlichen Steckteils (5) zwischen dem männlichen Steckteil (5) und dem weiblichen Steckteil (4) angeordnet ist und wobei die Blende (8), bevorzugt mittels des Kontaktfortsatzes (11) an dem Distanzring (16) befestigt ist, wobei der Distanzring (16) im unfixierten Zustand des männlichen Steckteils (5) noch nicht in seiner Endposition in dem weiblichen Steckteil (4) angeordnet ist und wobei beim Einstecken des männlichen Steckteils (5) in das weibliche Steckteil (4) der Distanzring (16) zusammen mit der Blende (8) in seine Endposition verschoben wird.

12. Verbinder nach einem der Ansprüche 1 bis 11, wobei der Verbinder (1) zumindest ein Rückstellelement, insbesondere zumindest eine Feder (17) aufweist, die zwischen dem weiblichen Steckteil (4) und der Blende (8) angeordnet ist und die beim Einstecken des männlichen Steckteils (5) in das weibliche Steckteil (4) gespannt wird, so dass die Blende (8) beim Lösen des männlichen Steckteils (5) von dem weiblichen Steckteil (4) durch die Rückstellkraft in ihre Ausgangsposition zurückgeschoben wird.

13. Verbinder nach Anspruch 12, wobei das Rückstellelement bzw. die Feder (17) mit einem ersten Federende (18) an einer Anschlagfläche (19) des weiblichen Steckteils (4) anliegt und mit einem zweiten Federende (20) an einer Anschlagfläche (21) der Blende (8) anliegt.

14. Verbinder nach einem der Ansprüche 1 bis 13, wobei das Verifikationselement beziehungsweise der Code (7) durch zumindest ein Verfahren ausgewählt aus der Gruppe: "Drucken, Laserbeschriften, Etikettieren, Gravieren" auf das weibliche Steckteil (4) aufgebracht ist.

15. Verbinder nach einem der Ansprüche 1 bis 14, wobei das Verifikationselement bzw. der Code (7) auslesbare Informationen betreffend den Verbinder (1), insbesondere betreffend den Hersteller und/oder die Artikelnummer und/oder den Typ und/oder das Material und/oder das Herstellungsdatum und/oder die Batch-Nummer des Verbinders, enthält und/oder einen Error-Proof-Code enthält.

## Claims

1. A connector (1) for connecting two fluid-carrying elements, in particular for connecting two motor vehicle pipes (2, 3), with a female plug (4) and a male plug (5) that can be inserted into the female plug (4), wherein a retainer (6) is connected to the female plug (4), and can be used to fix the male plug (5) to the female plug (4), **characterized in that**
the female plug (4) has at least one verification element, in particular in the form of a code (7), which in the unfixed state of the male plug (5) is at least in areas covered by at least one aperture (8) arranged on the female plug (4), and not readable
and/or that the female plug (4) has at least one part of a verification element, in particular in the form of a part (7a) of a code (7), wherein the verification element or the code (7) is incomplete and not readable in the unfixed state of the male plug (5), and wherein at least one additional or the missing part (7b) of the verification element or the code (7) is arranged at least on one aperture (8) arranged on the female plug (4),
wherein the at least one aperture (8) is shifted in such way during insertion of the male plug (5) into the female plug (4) that the verification element or the code (7) is complete and/or readable in the fixed or completely inserted state of the male plug (5).

2. The connector according to claim 1, wherein the verification element or the code (7) is a readable code, in particular a machine-readable code, preferably a QR code and/or a barcode and/or a DataMatrix code.

3. The connector according to one of claims 1 or 2, wherein the verification element or the code (7) is arranged on the outer surface (9) of the female plug (4).

4. The connector according to one of claims 1 to 3, wherein the verification element or the code (7) is immovably or essentially immovably arranged on the female plug (4), in particular on the outer surface (9) of the female plug (4).

5. The connector according to one of claims 1 to 4, wherein the aperture (8) is axially shifted in the insertion direction during insertion of the male plug (5) into the female plug (4), and preferably guided axially in the insertion direction along the outer surface (9) of the female plug (4).

6. The connector according to one of claims 1 to 5, wherein the aperture (8) is designed as a pinhole, and wherein the verification element or the code (7) can be read preferably through at least one recess (10) of the pinhole in the fixed or completely inserted state of the male plug (5).

7. The connector according to one of claims 1 to 6, wherein the aperture (8) can be shifted through direct and/or indirect interaction with the male plug (5).

8. The connector according to one of claims 1 to 7, wherein the aperture (8) has at least one contact extension (11) for interacting with the male plug (5), wherein the contact extension (11) preferably passes through a contact recess (12) of the female plug (4), and preferentially protrudes into the interior of the female plug (4).

9. The connector according to claim 8, wherein the male plug (5) has at least one centering element (13), which engages into a form-fit recess (14) of the female plug (4) preferably arranged on the inner surface of the female plug (4) in the fixed or completely inserted state of the male plug (5), wherein the contact extension (11) of the aperture (8) protrudes into the form-fit recess (14) of the female plug (4), and wherein the centering element (13) of the male plug (5) interacts, in particular directly interacts, with the contact extension (11) during insertion of the male plug (5) into the female plug (4), so that the aperture (8) is shifted.

10. The connector according to one of claims 8 or 9, wherein the male plug (5) has a sloping surface (15), which interacts, in particular directly interacts, with the contact extension (11) of the aperture (8) during insertion of the male plug (5) into the female plug (4), so that the aperture (8) is shifted.

11. The connector according to one of claims 8 to 10, wherein at least one spacer ring (16) is provided in the female plug (4), which is arranged between the male plug (5) and the female plug (4) in the fixed or completely inserted state of the male plug (5), and wherein the aperture (8) is fastened to the spacer ring (16), preferably by means of the contact extension (11), wherein the spacer ring (16) is not yet arranged in its end position in the female plug (4) in the unfixed state of the male plug (5), and wherein the spacer ring (16) together with the aperture (8) is shifted into its end position during insertion of the male plug (5) into the female plug (4).

12. The connector according to one of claims 1 to 11, wherein the connector (1) has at least one restoring element, in particular at least one spring (17), which is arranged between the female plug (4) and the aperture (8), and which is tensioned during insertion of the male plug (5) into the female plug (4), so that the aperture (8) is pushed back into its initial position by the restoring force during detachment of the male plug (5) from the female plug (4).

13. The connector according to claim 12, wherein the restoring element or the spring (17) abuts with a first spring end (18) against a stop surface (19) of the female plug (4), and abuts with a second spring end (20) against a stop surface (21) of the aperture (8).

14. The connector according to one of claims 1 to 13, wherein the verification element or the code (7) is applied to the female plug (4) in at least one procedure from the group: "Printing, laser inscription, labeling, engraving".

15. The connector according to one of claims 1 to 14, wherein the verification element or the code (7) contains readable information relating to the connector (1), in particular relating to the manufacturer and/or the article number and/or the type and/or the material and/or the manufacturing date and/or the batch number of the connector, and/or contains an error-proof code.

## Revendications

1. Raccord (1) pour relier deux éléments conducteurs de fluide, en particulier pour relier deux conduits de véhicule automobile (2, 3), avec une partie insérable femelle (4) et une partie mâle (5) insérable dans la partie insérable femelle (4), sachant qu'un élément de retenue (6) est raccordé à la partie insérable femelle (4) avec lequel la partie insérable mâle (5) peut être fixée à la partie insérable femelle (4), **caractérisé en ce que**
la partie insérable femelle (4) comporte au moins un élément de vérification, en particulier sous la forme d'un code (7), qui, à l'état non fixé de la partie insérable mâle (5), est au moins en partie recouvert par au moins un cache (8) disposé sur la partie insérable femelle (4) et n'est pas lisible,
et/ou la partie insérable femelle (4) comporte au moins une partie d'un élément de vérification, en particulier sous la forme d'une partie (7a) d'un code (7), sachant que l'élément de vérification ou le code (7) est incomplètement lisible ou pas lisible à l'état non fixé de la partie insérable mâle (5) et sachant que sur au moins un cache (8) disposé sur la partie insérable femelle (4) est disposée au moins une autre partie ou la partie manquante (7b) de l'élément de vérification ou du code (7),
sachant qu'au moins un cache (8) est déplacé lors de l'insertion de la partie insérable mâle (5) dans la partie insérable femelle (4) de telle manière que l'élément de vérification ou le code (7) est complet et/ou lisible à l'état fixé ou complètement inséré de la partie insérable mâle (5).

2. Raccord selon la revendication 1, sachant que l'élément de vérification ou le code (7) est un code lisible, en particulier un code lisible par une machine, de préférence un code à Réponse Rapide (QR) et/ou un code à barres et/ou un code DataMatrix.

3. Raccord selon l'une quelconque des revendications 1 ou 2, sachant que l'élément de vérification ou le code (7) est disposé sur la surface extérieure (9) de la partie insérable femelle (4).

4. Raccord selon l'une quelconque des revendications 1 à 3, sachant que l'élément de vérification ou le code (7) est disposé de façon non mobile ou pour l'essentiel non mobile sur la partie insérable femelle (4), en particulier sur la surface extérieure (9) de la partie insérable femelle (4).

5. Raccord selon l'une quelconque des revendications 1 à 4, sachant que le cache (8) est axialement déplacé dans la direction d'insertion lors de l'insertion de la partie insérable mâle (5) dans la partie insérable femelle (4) et est axialement guidé dans la direction d'insertion de préférence le long de la surface extérieure (9) de la partie insérable femelle (4).

6. Raccord selon l'une quelconque des revendications 1 à 5, sachant que le cache (8) est constitué comme un cache perforé et sachant de préférence qu'à l'état fixé ou complètement inséré de la partie insérable mâle (5), l'élément de vérification ou bien le code (7) peut être lu à travers au moins un évidement (10) du cache perforé.

7. Raccord selon l'une quelconque des revendications 1 à 6, sachant que le cache (8) peut être déplacé par interaction directe et/ou indirecte avec la partie insérable mâle (5).

8. Raccord selon l'une quelconque des revendications 1 à 7, sachant que le cache (8) comporte au moins une extension de contact (11) pour l'interaction avec la partie insérable mâle (5), sachant que l'extension de contact (11) pénètre de préférence à travers un évidement de contact (12) de la partie insérable femelle (4) et dépasse de préférence dans l'espace intérieur de la partie insérable femelle (4).

9. Raccord selon la revendication 8, sachant que la partie insérable mâle (5) comporte au moins un élément de centrage (13), qui vient en prise à l'état fixé ou complètement inséré de la partie insérable mâle (5) dans un évidement à conformité de forme (14) de la partie insérable femelle (4), disposé de préférence sur la surface intérieure de la partie insérable femelle (4), sachant que l'extension de contact (11) du cache (8) dépasse dans l'évidement à conformité de forme (14) de la partie insérable femelle (4) et sachant que l'élément de centrage (13) de la partie insérable mâle (5) interagit, en particulier interagit directement, avec l'extension de contact (11) lors de l'insertion de la partie insérable mâle (5) dans la partie insérable femelle (4) de telle manière que le cache (8) est déplacé.

10. Raccord selon l'une quelconque des revendications 8 ou 9, sachant que la partie insérable mâle (5) comporte une surface inclinée (15), qui interagit, en particulier interagit directement, avec l'extension de contact (11) du cache (8) lors de l'insertion de la partie insérable mâle (5) dans la partie insérable femelle (4), de telle sorte que le cache (8) est déplacé.

11. Raccord selon l'une quelconque des revendications 8 à 10, sachant qu'au moins une bague entretoise (16) est prévue dans la partie insérable femelle (4), qui est disposée à l'état fixé ou complètement inséré de la partie insérable mâle (5) entre la partie insérable mâle (5) et la partie insérable femelle (4) et sachant que le cache (8) est fixé sur la bague entretoise (16), de préférence au moyen de l'extension de contact (11), sachant que la bague entretoise (16) n'est pas encore disposée à l'état non fixé de la partie insérable mâle (5) dans sa position finale dans la partie insérable femelle (4) et sachant que la bague entretoise (16) est déplacée avec la cache (8) dans sa position finale lors de l'insertion de la partie insérable mâle (5) dans la partie insérable femelle (4).

12. Raccord selon l'une quelconque des revendications 1 à 11, sachant que le Raccord (1) comporte au moins un élément de rappel, en particulier au moins un ressort (17), qui est disposé entre la partie insérable femelle (4) et le cache (8) et qui est tendu lors de l'insertion de la partie insérable mâle (5) dans la partie insérable femelle (4) de telle manière que le cache (8) est repoussé par la force de rappel dans sa position initiale lors de la séparation de la partie insérable mâle (5) de la partie insérable femelle (4).

13. Raccord selon la revendication 12, sachant que l'élément de de rappel ou le ressort (17) s'applique avec une première extrémité de ressort (18) à une surface de butée (19) de la partie insérable femelle (4) et s'applique à une surface de butée (21) du cache (8) avec une deuxième extrémité de ressort (20).

14. Raccord selon l'une quelconque des revendications 1 à 13, sachant que l'élément de vérification ou le code (7) est appliqué sur la partie insérable femelle (4) par au moins un procédé choisi dans le groupe : « impression, inscription au laser, étiquetage, gravage ».

15. Raccord selon l'une quelconque des revendications 1 à 14, sachant que l'élément de vérification ou le code (7) contient des informations lisibles concernant le raccord (1), en particulier concernant le fabricant et/ou le numéro d'article et/ou le type et/ou le matériau et/ou la date de fabrication et/ou le numéro de lot du raccord et/ou contient un code anti-erreur.
